# EUROPEAN PATENT APPLICATION

(11) **EP 4 353 690 A1**
(43) Date of publication of application: **17.04.2024**
(21) Application number: 22201676.8
(22) Date of filing: 14.10.2022
(51) Int. Cl.: C03B 33/02, B23K 26/04, B23K 26/06, B23K 26/073, B23K 26/53

(54) **SYSTEM AND METHOD FOR PROCESSING A TRANSPARENT MATERIAL**

(71) Applicant: NKT Photonics A/S, 3460 Birkerød (DK)
(72) Inventor: BAKER, Ian, Southampton, SO31 4RA (GB)
(74) Representative: Zacco Denmark A/S

(57) **Abstract**

Disclosed is a system for processing a transparent material, comprising: a laser source configured to generate a laser beam comprising bursts of laser pulses, wherein the pulses are defined by a pulse energy and a pulse repetition rate; one or more focusing element(s) configured to receive the laser beam, and direct the laser beam towards the transparent material, said focusing element(s) comprise(s) a variable focal length configured for being changed from a first focal length to a second focal length along a focus direction, a first controller configured to change the variable focal length in an oscillating manner between the first focal length and the second focal length at a desired control-frequency.

## Description

### Field of the invention

The present disclosure relates generally to a system and a method for processing a transparent material. More specifically, the present disclosure relates to processing a transparent material using a laser source. Most specifically, the present disclosure relates to using a laser source to form a filament inside a transparent material, for example such that the transparent material is divided into two separate parts.

### Background

Processing a transparent material using a laser is known in the field of laser processing. For example, US 2018/0134606 discloses a method that produces so-called filamentary damages, which form sub-micrometer hollow channels in a volume of a glass sheet element. Filamentary damages, or simply filaments, are produced by weak focusing of laser pulses having a high intensity and short duration, such that the pulses can self-focus by the nonlinear Kerr effect due to the formation of a plasma. US 2018/0134606 discloses a method where a laser is focused to a given focal depth inside a transparent material having a thickness of more than 2 mm, while the laser is passed over the material. A first pass produces damages in a depth that is smaller than the thickness of the transparent material, so the transparent material is not separated into two parts. For this reason, one or more repetitive passes with another focal depth for each pass is introduced, whereby the transparent material finally is separated into two parts. However, as pointed out in US 2018/0134606, a problem that may arise when repeatedly passing the laser beam in different focal depths is that the damages in the depths of the volume of glass element will not be aligned ideally.

A solution to this problem is given in US 2018/0134606 and provided by displacing the points of incidence of the laser pulses in the glass element over the surface thereof along an offset line, which is slightly spaced from a separation line. However, this solution is relatively complex.

Processing of a transparent and thin material, such as less than 2mm, by filamentation has further been described as the prior art described in US 2018/0134606.

Further, processing of multi-layers, i.e. laminated glass, by filamentation has further been described in US 2013/0126573. Here, the method of separating the laminated glass is similar to the method of separating a thick glass substrate as described in US 2018/0134606, since repetitive passes with different focal depths, corresponding to the layer positions, are used.

As multiple passes are problematic, US 2016/0016257, discloses a solution of using a single pass over either a glass substrate or a laminated glass, in particular by using an extended laser interaction focal volume, i.e. an extended depth-of-field. The extended depth-of-field may be provided by generating a Bessel beam, for example by using an Axicon. Alternatively, the extended depth-of-field may be provided by generating an Airy beam, for example by using a spatial light modulator (SLM). However, using an extended depth-of-field by generating either a Bessel beam or an Airy beam requires very high laser power, and as pointed out in US 2016/0016257, this may for example damage the SLM, and thus be problematic.

Further, as pointed out by D. Sohr et al. in "Using airy beams for combined glass cutting and edge shaping. SPIE LASE, Jan 2022, San Francisco, United States", using an Airy beam also leads to varying side lobes within the focal volume, whereby surface damages provoke unwanted effects, in particular an asymmetric laser modification of the glass sheet that increases with the pulse peak intensity. To solve this problem, D. Sohr et al. proposed to tilt the Airy beam by using a lateral offset on the phase mask. However, this solution is relatively complex.

Accordingly, there is a need for providing a non-complex solution to a system and a method for processing a transparent material. Further, there is a desire to provide a system and a method for processing a transparent material in a single pass without the above-described problems.

### Summary

It is an objective of this disclosure to provide a non-complex solution to a system and a method for processing a transparent material.

Further, it is an objective of this disclosure to provide a system and a method for processing a transparent material in a single pass.

These and other objectives have been solved by a system and a method for processing a transparent material as defined in the claims and as described below in the present disclosure.

The present disclosure generally provides a system for processing a transparent material, comprising: a laser source configured to generate a laser beam comprising bursts of laser pulses, wherein the pulses are defined by a pulse energy and a pulse repetition rate; one or more focusing element(s) configured to receive the laser beam, and direct the laser beam towards the transparent material, said focusing element(s) comprise(s) a variable focal length configured for being changed from a first focal length to a second focal length along a focus direction, a first controller configured to change the variable focal length in an oscillating manner between the first focal length and the second focal length at a desired control-frequency.

Further, the present disclosure generally provides a method for processing a transparent material, comprising the steps of: generating, using a laser source, a laser beam comprising bursts of laser pulses, wherein the pulses are defined by a pulse energy and a pulse repetition rate; directing, using one or more focusing element(s) configured to receive the laser beam, the laser beam towards the transparent material, wherein said focusing element(s) comprise(s) a variable focal length configured for being changed from a first focal length to a second focal length along a focus direction; and changing, using a first controller, the variable focal length in an oscillating manner between the first focal length and the second focal length at a desired control-frequency.

The changing of the variable focal length in the oscillating manner may be faster than changing the transparent material in an oscillating manner, for example due to the mass of the transparent material.

Nevertheless, the present disclosure also generally provides a system for processing a transparent material, comprising: a laser source configured to generate a laser beam comprising bursts of laser pulses, wherein the pulses are defined by a pulse energy and a pulse repetition rate; one or more focusing element(s) configured to receive the laser beam, and direct the laser beam towards the transparent material, wherein the transparent material is located on a moveable stage configured for being changed from a first position to a second position along a stage direction, a first controller configured to change the moveable stage, whereby the transparent material is also changed, in an oscillating manner between the first position and the second position at a desired control-frequency.

Further, the present disclosure generally provides a method for processing a transparent material, comprising the steps of: generating, using a laser source, a laser beam comprising bursts of laser pulses, wherein the pulses are defined by a pulse energy and a pulse repetition rate; directing, using one or more focusing element(s) configured to receive the laser beam, the laser beam towards the transparent material, wherein the transparent material is located on a moveable stage configured for being changed from a first position to a second position along a stage direction; and changing, using a first controller, the moveable stage, hence the transparent material, in an oscillating manner between the first position and the second position at a desired control-frequency.

In a first and more specific aspect of the disclosure, there is disclosed a system for processing a transparent material, comprising:
- a laser source configured to generate a laser beam comprising bursts of laser pulses, wherein the pulses are defined by a pulse energy and a pulse repetition rate;
- one or more focusing element(s) configured to receive the laser beam, and direct the laser beam towards the transparent material, said focusing element(s) comprise(s) a variable focal length configured for being changed from a first focal length to a second focal length along a focus direction, whereby:
   i. when at the first focal length, a first beam-waist is formed relative to the transparent material, wherein the pulse energy is defined such that first beam-waist forms a first intensity that is responsible for forming a first Kerr-lensing effect inside the transparent material, whereby a first filament is formed at a first Kerr-lensing position inside the transparent material, and
   ii. when at the second focal length, a second beam-waist is formed relative to the transparent material, wherein the pulse energy is defined such that the second beam-waist forms a second intensity that is responsible for forming a second Kerr-lensing effect inside the transparent material, whereby a second filament is formed at a second Kerr-lensing position inside the transparent material.

The system further comprises a first controller configured to change the variable focal length in an oscillating manner between the first focal length and the second focal length at a desired control-frequency, whereby the first filament and the second filament are formed in an oscillating manner inside the transparent material.

In a second and more specific aspect of the disclosure, there is disclosed a method for processing a transparent material, comprising the steps of:
- generating, using a laser source, a laser beam comprising bursts of laser pulses, wherein the pulses are defined by a pulse energy and a pulse repetition rate;
- directing, using one or more focusing element(s) configured to receive the laser beam, the laser beam towards the transparent material, wherein said focusing element(s) comprise(s) a variable focal length configured for being changed from a first focal length to a second focal length along a focus direction, whereby:
   i. when at the first focal length, a first beam-waist is formed relative to the transparent material, the pulse energy being defined such that the first beam-waist forms a first intensity that is responsible for forming a first Kerr-lensing effect inside the transparent material, whereby a first filament is formed at a first Kerr-lensing position inside the transparent material, and
   ii. when at the second focal length, a second beam-waist is formed relative to the transparent material, the pulse energy being defined such that the second beam-waist forms a second intensity that is responsible for forming a second Kerr-lensing effect inside the transparent material, whereby a second filament is formed at a second Kerr-lensing position inside the transparent material; and

The method further comprises the step of changing, using a first controller, the variable focal length in an oscillating manner between the first focal length and the second focal length at a desired control-frequency, whereby the first filament and the second filament are formed in an oscillating manner inside the transparent material.

The change of the variable focal length in the oscillating manner, according to the present disclosure, and for the first and second aspect, has been found to be a better solution to process a transparent material in comparison to using a non-variable focal length, having for example a small depth-of-field with multiple passes at different depths for each pass, or an extended depth-of-field with a single pass using either a Bessel or an Airy beam, as described in the prior art.

Firstly, by the present disclosure, the change of the variable focal length in the oscillating manner may provide that that damages in the depths of the volume of glass element are aligned ideally. For this reason, the present disclosure provides a system and a method that is relatively simple to use.

Secondly, by the present disclosure, the change of the variable focal length in the oscillating manner may provide that a single pass on the transparent material is sufficient to process the transparent material. For this reason, the present disclosure provides an efficient solution for processing a transparent material. However, multiple passes may be used as well.

Thirdly, by the present disclosure, the change of the variable focal length in the oscillating manner may provide that low laser power can be used instead of a high laser power, thereby not damaging for example an SLM if such is used. For this reason, and because a low-power laser is considered to have lower cost than a high-power laser, the present disclosure provides a costeffective system and method for processing a transparent material.

Fourthly, by the present disclosure, the change of the variable focal length in the oscillating manner has shown that when the process is done, the laser cutting or laser cleaving has processed the transparent material in a manner such no further processes, such as mechanically tapping or breaking the material, are needed.

Accordingly, it has been found that the presently disclosed system and method not only overcomes the problems of the prior art, but also provides several advantages as described above.

Further embodiments and advantages of the present disclosure is disclosed in the following.

### Brief description of the drawings

The above and/or additional objects, features and advantages of the present disclosure, will be further described by the following illustrative and non-limiting detailed description of embodiments of the present disclosure, with reference to the appended drawing(s), wherein:
**Fig. 1** shows an example of prior art.
**Fig. 2** shows an example of a laminated glass substrate being processed according to the present disclosure.
**Fig. 3** shows another example of a laminated glass substrate being processed according to the present disclosure.
**Fig. 4** shows an example of how a laminated glass substrate may be processed according to the present disclosure, particularly such that the transparent material is processed along two directions.
**Fig. 5** shows another example of how the same laminated glass substrate, as described in relation to **Fig. 4****,** is processed according to the present disclosure.
**Fig. 6** shows examples of focusing element(s) according the present disclosure.
**Fig. 7** shows a working example of a system according to the present disclosure.
**Fig. 8** shows the result of processing a transparent material according to the present disclosure.

### Detailed description

The formation of filaments has been described in the background of the present disclosure. The prior art may be consulted to learn more about filamentation. However, as described in US 2013/0126573, the filamentation process is believed to depend mainly on two competing processes. First the spatial intensity profile of the laser pulse acts like a focusing lens due to the nonlinear optical Kerr effect. This causes the beam to self-focus, resulting in an increase of the peak intensity. This effect is limited and balanced by increasing diffraction as the diameter decreases until a stable beam waist diameter is reached that can propagate distances many times longer than that expected from a simple calculation of the confocal beam parameter (or depth of focus) from this spot size.

At high peak intensity, multiphoton ionization, field ionization and electron impact ionization of the medium sets in to create low-density plasma in the high intensity portion of the laser beam. This plasma temporarily lowers the refractive index in the center of the beam path causing the beam to defocus and break up the filament. The dynamic balance between Kerr effect selffocusing and plasma defocusing can lead to multiple re-focused laser interaction filaments though to formation of a stable filament, sometimes called a plasma channel.

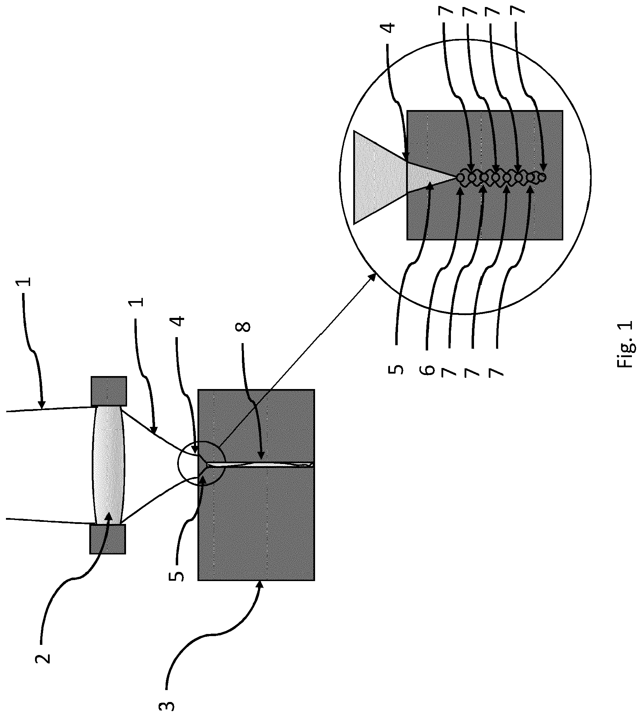

The formation of a plasma channel, according to the prior art, is shown in **Fig. 1** of the present disclosure. Here, a laser source is configured to generate a laser beam **1**. The laser beam is defined by a pulse-energy. A focusing element **2** is further configured to receive the laser beam **1** and direct the laser beam **1** towards a transparent material **3**. Further, a beam-waist **4** is formed relative to the transparent material **3**. As shown in **Fig. 1**, the pulse energy is here defined such that the beam-waist **4** forms an intensity that is responsible for forming a first Kerr-lensing effect **5** inside the transparent material **3**, whereby a first filament **6** is formed at a first Kerr-lensing position inside the transparent material **3**. The formation of the first filament **6,** together with the Kerr-lensing effect **5,** encircled in the figure, is also shown enlarged in the enlarged circle, showing that multiple re-focused laser interaction filaments **7** are also formed. These filaments **7** form a plasma channel **8** within the transparent material **3**, and the filamentation process stops at the bottom of the transparent material **3**, since the process does not continue in air.

According to the present disclosure, the inventor of the present disclosure has found that by changing the variable focal length in an oscillating manner, i.e. through the transparent material, filaments can for example be formed at desired locations in a repetitive manner. The desired locations may be dependent on the first and second focal length.

Hence, in one embodiment of the system and method as generally disclosed, the variable focal length is configured for being changed from a first focal length to a second focal length along a focus direction, whereby: when at the first focal length, a first beam-waist is formed relative to the transparent material, the pulse energy being defined such that first beam-waist forms a first intensity that is responsible for forming a first Kerr-lensing effect inside the transparent material, whereby a first filament is formed at a first Kerr-lensing position inside the transparent material, and when at the second focal length, a second beam-waist is formed relative to the transparent material, the pulse energy being defined such that the second beam-waist forms a second intensity that is responsible for forming a second Kerr-lensing effect inside the transparent material, whereby a second filament is formed at a second Kerr-lensing position inside the transparent material.

It may see contra-intuitive why the formation of a first filament and a second filament in a repetitive or oscillating manner is advantageous. Particularly, it may seem contra-intuitive when reading the prior art, as this describes how a plasma channel is formed, thus not requiring the process to be repeated.

However, in the following, the advantages of doing so will be apparent.

### First and second controller

In one embodiment of the present disclosure, the desired control-frequency is lower than the pulse repetition rate. This embodiment may ensure that one or additional filament(s) is/are generated between the first and the second filament. This is advantageous when the first focal length and the second focal length is separated by a relatively long distance because several filaments may form a non-separated or continuous filament channel along the relatively long distance. By a relatively long distance, is here understood a distance that is longer than the size of a filament. Typically, the size of a filament is in the order of 1 micron. This embodiment may for example be used for processing a transparent material, for example where the purpose is to form a filament continuous channel within the transparent material such that the transparent material separates into two parts. One example of such could be glass cutting, or glass cleaving, where the transparent material is glass or layers of glass, i.e. a laminated glass substrate.

In relation to glass cutting, or glass cleaving, of laminated glass, the inventor of the present disclosure has found that when one or additional filament(s) is/are generated between the first and the second filament as described above, and the first and second filament are formed in at least two different layers of the laminated glass substrate, the conditions for Kerr lensing are present due to the oscillation along the focus direction, whereby a Kerr lens in each layer of the laminate is initiated.

In view of the above, the inventor of the present disclosure has found a system and method to process a transparent glass, in particular a laminated glass substrate, which is able to continue the Kerr lensing effect in each layer, without the need of passing the beam one the first layer, and then focus the beam onto the next layer and pass the beam on the next layer, and so on.

Instead, by oscillating the focal length according to the present disclosure, the beam can simply be passed across the transparent in a single pass. In one embodiment, the single pass may be performed in a stepwise manner, where a movement or step along the transparent material is for example made after half a period or a full period. However, in a preferred embodiment, the single pass is performed in a continuous manner, as will be described later in more details.

Further, in view of the above, the inventor of the present disclosure has also found a system and method to process a transparent glass, in particular a laminated glass substrate, which is able to continue the Kerr lensing effect in each layer without the need for an extended depth-of-focus, such as formed by a Bessel beam or an Airy beam, thus without the need for a high laser power.

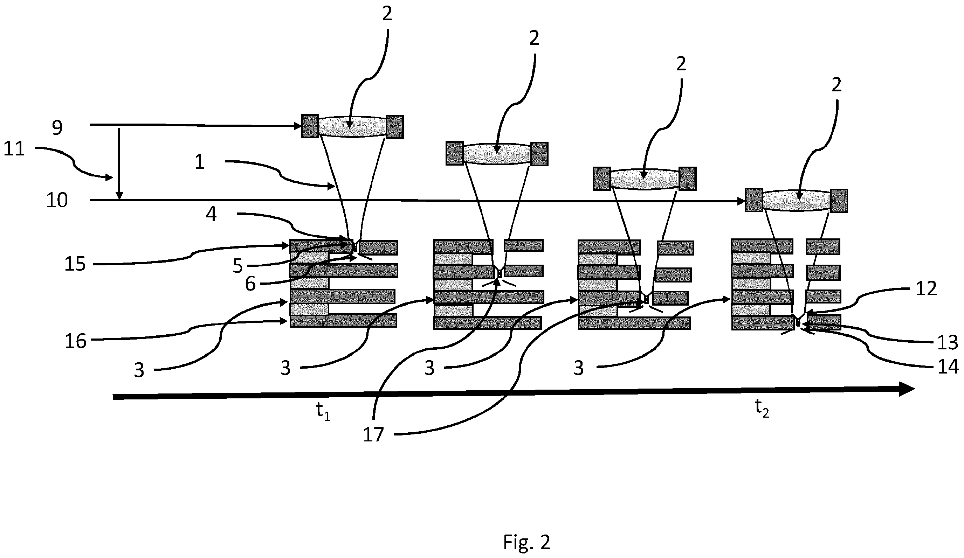

In **Fig. 2** is shown an example of a laminated glass substrate being processed according to the present disclosure. In view of the present disclosure, **Fig. 2** shows a method for processing a transparent material **3**, in this example in the form of the laminated glass substrate **3**. The method comprises the steps of:
- generating, using a laser source (not shown), a laser beam **1** comprising bursts of laser pulses, wherein the pulses are defined by a pulse energy and a pulse repetition rate;
- directing, using a focusing element **2** configured to receive the laser beam **1**, the laser beam **1** towards the transparent material **3**, wherein the focusing element comprises a variable focal length configured for being changed from a first focal length **9** to a second focal length **10** along a focus direction **11**, whereby:
   i. when at the first focal length **9**, a first beam-waist **4** is formed relative to the transparent material **3**, the pulse energy being defined such that the first beam-waist **4** forms a first intensity that is responsible for forming a first Kerr-lensing effect **5** inside the transparent material **3**, whereby a first filament **6** is formed at a first Kerr-lensing position inside the transparent material, and
   ii. when at the second focal length **10**, a second beam-waist **12** is formed relative to the transparent material, the pulse energy being defined such that the second beam-waist **12** forms a second intensity that is responsible for forming a second Kerr-lensing effect **13** inside the transparent material, whereby a second filament **14** is formed at a second Kerr-lensing position inside the transparent material **3**.

The method further comprises the step of changing, using a first controller (not shown), the variable focal length in an oscillating manner between the first focal length **9** and the second focal length **10** at a desired control-frequency, whereby the first filament **6** and the second filament **14** are formed in an oscillating manner inside the transparent material **3**.

**Fig. 2** shows how the variable focal length changes over time, from time, **t₁** to **t₂.** As the variable focal length varies in an oscillating manner, the movement is repeated later in time (not shown). In **Fig. 2****,** only half a period of the oscillation is shown since the focal length, or rather the beam waist (**4, 14**) is varied from a top layer **15** to a bottom layer **16** of the transparent material **3**.

In this example, the desired control-frequency is lower than the pulse repetition rate. Accordingly, in this this example, additional filaments **17** are generated between the first **6** and the second filament **14**.

As can be seen in **Fig. 2****,** and just described, the beam waist (**4, 14**) is varied from the top layer **15** to the bottom layer **16** of the transparent material **3.** However, the method may not necessarily start at the top layer **15.** The starting point may be chosen arbitrarily, or for example at the bottom layer **16.**

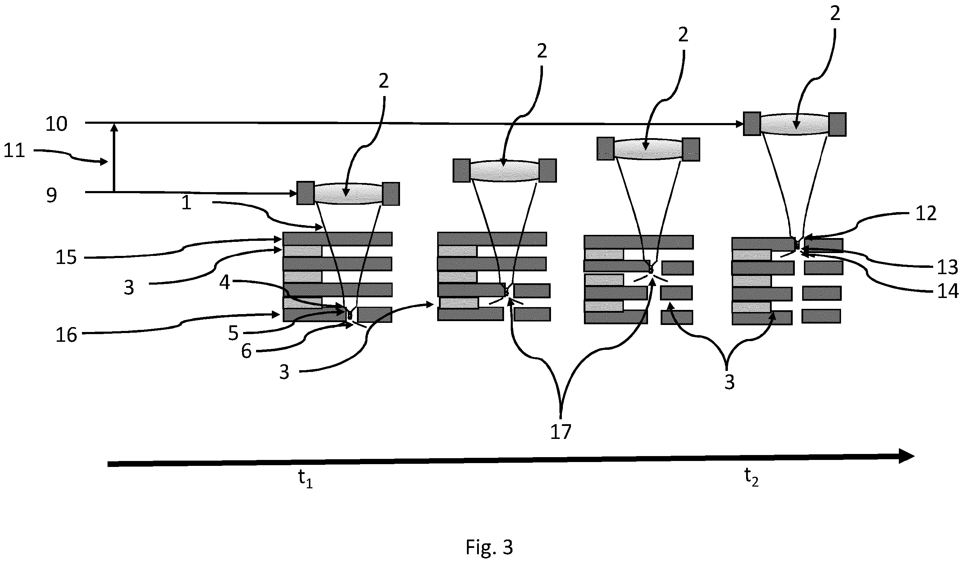

In **Fig. 3** is shown another example of a laminated glass substrate being processed according to the present disclosure. Accordingly, **Fig. 3** shows another example on how the variable focal length changes over time, from time, **t₁** to **t₂**. As the variable focal length varies in an oscillating manner, the movement is repeated later in time (not shown). In **Fig. 3**, only half a period of the oscillation is shown since the focal length, or rather the beam waist (**4, 14**) is here varied from the bottom layer **16** to the top layer **15** of the transparent material **3.**

As can also be seen in **Fig. 3**, and just described, the beam waist (**4, 14**) is varied from the bottom layer **16** to the top layer **15** of the transparent material **3.** However, the method may not necessarily start at the bottom layer **16.** The starting point may be chosen arbitrarily, or for example at the top layer **15.**

However, the inventor of the present disclosure has, in a preferred embodiment, found that if the method starts from the bottom layer, then this is more advantageous than starting from the top layer. In other words, the inventor of the present disclosure has found that when the focal length is oscillating, meaning that the filaments are formed in a sequence of alternating upward and downward strokes, then in a preferred embodiment, it is more advantageous to only form filaments during the upward strokes. Accordingly, when comparing **Fig. 2** and **Fig. 3****,** then **Fig. 3** shows the preferred embodiment, where the method is most efficient.

A reason for the difference in efficiency may be that no occlusions are present in the layers on the way up since the upper material layers have not been processed, whereby for example edges and other defects or material damages may interfere with the focusing beam.

Accordingly, in a preferred embodiment, the laser source is synchronized with the desired control-frequency such that the laser source only generates a beam comprising bursts of laser pulses at around half of the period. The bursts of laser pulses may for example be prevented from being generated using a beam shutter, wherein the shutter is synchronized with the desired control-frequency. Alternatively, the bursts of laser pulses may for example be prevented from being generated by turning on and off the laser in synchrony with the desired control-frequency. When the laser source is synchronized with the desired control-frequency such that the laser source only generates a beam comprising bursts of laser pulses at about half of the period, then in a preferred embodiment, the bursts of laser pulses may be prevented from being generated when the focal length is changed to a longer focal length. In other words, in a preferred embodiment, the bursts of laser pulses may be prevented from being generated when the beam waists are formed downstroke.

In other embodiments, the desired control-frequency is set to be around the pulse repetition rate. In a related embodiment, the control-frequency may be tuned and/or synchronized to the pulse repetition rate such that the first filament is formed at the top of the transparent material, and such that the second filament is formed at the bottom of the transparent material. This embodiment may for example be used for processing very thin transparent materials. However, in another related embodiment, the control-frequency may also be tuned and/or synchronized to the pulse repetition rate such that the first filament and the second filament are formed close to each other, for example between the top and bottom of the transparent material. This embodiment may for example be used for processing a specific location within the transparent material, for example where the purpose is to form a filament within the transparent material such that the transparent material does not separate into two parts. One example of such could be an eye-surgery, where the transparent material is a part of the eye, such as the retina.

In other embodiments, for example where the purpose is to form a single filament within the transparent material, the desired control-frequency is set to be higher than the pulse repetition rate. In a related embodiment, the control-frequency is tuned and/or synchronized to the pulse repetition rate such that the first filament and the second filament are formed at the same location or at least close to each other, for example between the top and bottom of the transparent material. This embodiment may for example also be used for processing a specific location within the transparent material, for example where the purpose is to form a filament within the transparent material such that the transparent material does not separate into two parts. One example of such could be an eye-surgery, where the transparent material is a part of the eye, such as the retina.

In one embodiment of the present disclosure, the desired control-frequency is between 1 Hz and 1000 Hz. The desired control-frequency may depend on the purpose, and/or the desired control-frequency may depend on the transparent material. In some embodiments, the desired control-frequency is preferably between 20 Hz and 800 Hz. In other embodiments, the desired control-frequency is more preferably between 30 and 700 Hz, such as around 50-150 Hz, such as around 130 Hz.

In most embodiments, the system further comprises a second controller configured to move: said focusing element(s) along a separation direction that differs from the focus direction such that the transparent material is processed along two directions; and/or the transparent material along a separation direction that differs from the focus direction such that the transparent material is processed along two directions.

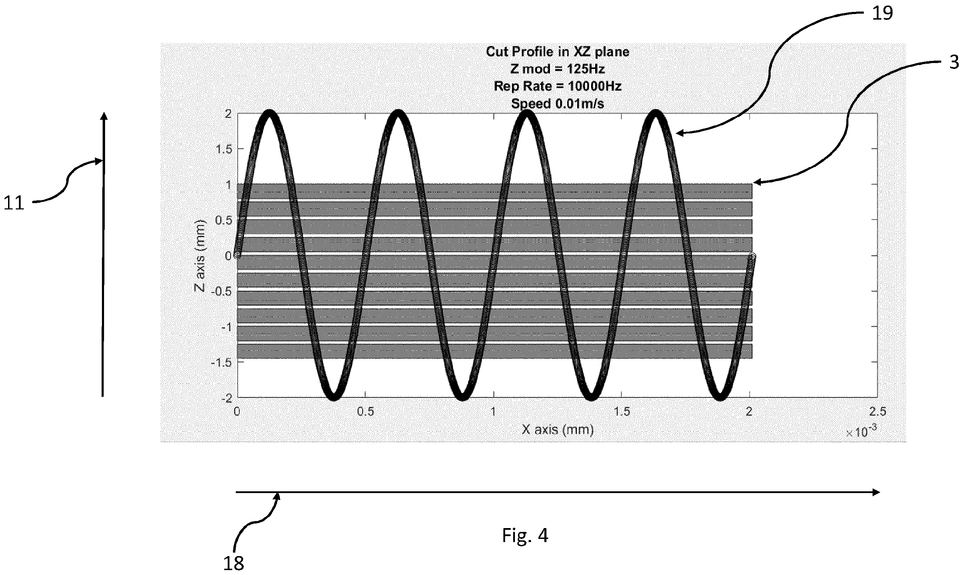

In **Fig. 4** is shown an example of how a laminated glass substrate may be processed according to the present disclosure, particularly such that the transparent material is processed along two directions, as just described above. **Fig. 4** shows the result of a computer-simulation, where several input-parameters have been used for the simulation. Firstly, the transparent material **3** has been selected to be in the form of a laminated glass substrate having ten layers of glass, each layer separated by a layer of air. The total thickness of the laminated glass substrate is around 2.5 mm. The pulses as generated by the laser source, according to the present disclosure, are defined by a pulse energy and a pulse repetition rate, where the pulse repetition rate in this example is here 10.000 Hz. Further, the variable focal length, according to the present disclosure, is configured for being changed from a first focal length to a second focal length along a focus direction **11**, which in this example is along the Z-axis. The variable focal length is, according to the present disclosure, changed in an oscillating manner between the first focal length and the second focal length at a desired control-frequency, which in this example is set to 125 Hz. Accordingly, in this example, the desired control-frequency is lower than the pulse repetition rate.

Further, the focusing element, according to the just described embodiment, is moved along a separation direction that differs from the focus direction such that the transparent material **3** is processed along two directions, where the separation direction **18** in this example is along the X-axis. Thus, the cutting, or cleaving, as provided by the filamentation formation, is performed along two directions, namely the along the X-axis and the Z-axis, thus in the XZ-plane. Further, in this example, the focusing element is moved along the separation direction **18** at a desired speed, which in this example is set to 0.01 m/s.

With these input-parameters, it can be seen from **Fig. 4** that the oscillation pattern **19**, due to the movement along the X-direction, is along the X-axis, and in this example such that a period of the oscillation pattern **19** processes, i.e. cuts, around 0.5 micron of the laminated glass substrate along the X-axis.

The oscillation pattern **19** comprises several points, where each dot represents a pulse of the laser, thus the location of where a filament (**6, 14, 17**) is formed. As shown in **Fig. 4****,** each dot has a certain diameter. This diameter is however not representative for the actual (real world) dimension of the filament. As previously described, each filament is around 1 micron in diameter. Accordingly, and since the period of the oscillation pattern processed 0.5 micron of the laminated glass substrate along the X-axis, the filaments would overlap in an actual (real world) laminated glass substrate. For this reason, the filamentation formation in the oscillation manner, according to the present disclosure, makes a cut through the laminated glass substrate **3**, particular in a single pass along the X-axis.

Thus, by having a second controller configured to move: said focusing element(s) along a separation direction that differs from the focus direction such that the transparent material is processed along two directions; and/or the transparent material along a separation direction that differs from the focus direction such that the transparent material is processed along two directions, there is provided an efficient system and/or method to process a transparent material.

As demonstrated with the above example, a rather large overlap of filaments is present in the laminated glass substrate, both along the X-axis and the Z-axis. It is evident from **Fig. 4** that there are multiple filaments per layer, which may not be needed. Accordingly, the process may be optimized further, such as to reduce the overlap of filaments, and/or for a particular transparent material. Particularly, to optimize the method, and/or the system according to the present disclosure, the pulse repetition rate, the control-frequency, and the desired speed of moving the focusing element(s) and/or the speed of moving the transparent material may be adjusted.

To process a laminated glass substrate having multiple glass layers, the inventor of the present disclosure has found that the laser beam, in a preferred embodiment, may be configured to form at least two pulses per layer.

Under such circumstances, the first pulse may set up a waveguide channel in the glass layer, which then spatially compresses laser pulses to create the plasma, whereby cracking of the glass layer is initiated.

In a preferred embodiment, the pulse repetition rate and the desired control-frequency are selected to form at least two pulses per layer.

In another preferred embodiment, the desired speed of moving the focusing element(s) and/or the speed of moving the transparent material is selected to be dependent on the control-frequency, and/or the beam waist, and/or the filament size.

In yet another preferred embodiment, the desired speed of moving the focusing element(s), and/or the speed of moving the transparent material is selected to be equal to or more than 0.01 m/s, preferably equal to or more than 0.1 m/s, most preferably equal to or more than 1 m/s.

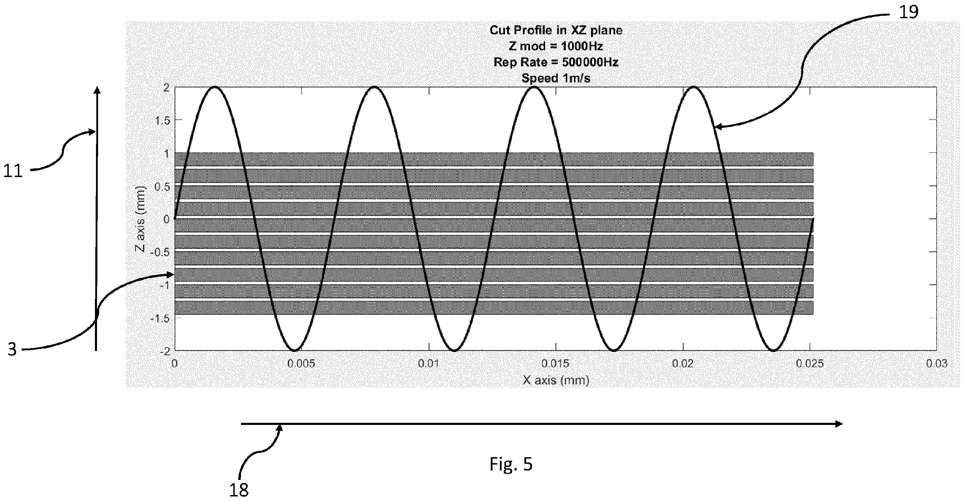

In **Fig. 5** is shown another example of how the same laminated glass substrate, as described in relation to **Fig. 4****,** may be processed according to the present disclosure, particularly such that the transparent material is processed along two directions, however with some different input-parameters. The pulses as generated by the laser source, according to the present disclosure, are defined by a pulse energy and a pulse repetition rate, where the pulse repetition rate in this example is here 500.000 Hz, i.e. fifty times more than that of the previous example. As with the previous example, the variable focal length, according to the present disclosure, is configured for being changed from a first focal length to a second focal length along a focus direction **11**, which in this example is along the Z-axis. The variable focal length is, according to the present disclosure, changed in an oscillating manner between the first focal length and the second focal length at a desired control-frequency, which in this example is set to 1000 Hz, i.e. eight times more than that of the previous example. Also in this example, the desired control-frequency is lower than the pulse repetition rate.

Further, the focusing element, according to the just described embodiment, is as in the previous example moved along a separation direction that differs from the focus direction such that the transparent material **3** is processed along two directions, where the separation direction **18** in this example is along the X-axis. Thus, the cutting or cleaving, as provided by the filamentation formation, is performed along two directions, namely the along the X-axis and the Z-axis, thus in the XZ-plane. Further, in this example, the focusing element is moved along the separation direction **18** at a desired speed, which in this example is set to 1 m/s, i.e. 100 times faster than that of the previous example.

With these input-parameters, it can be seen from **Fig. 5** that the oscillation pattern **19**, due to the movement along the X-direction, is along the X-axis, and in this example such that a period of the oscillation pattern **19** processes, i.e. cuts, around 6 microns of the laminated glass substrate along the X-axis, i.e. twelve times more than that of the previous example.

Since the desired control-frequency and the pulse-repetition have been increased, there are now many tens of laser pulse strikes per glass layer, i.e. along the Z-axis. For this reason, there may be a high amount of overlap of filaments along the Z-axis. The example thus shows that the pulse repetition rate and the desired control-frequency are selected to form at least two pulses per layer. However, since the period of oscillation pattern **19** processes around 6 microns of the laminated glass substrate along the X-axis, there may not be an overlap of filaments along the X-axis, for example at the top and bottom layers, whereby the desire speed of 1 m/s may not provide cutting or cleaving of all the glass layers. The reason for this being that the filaments may be in the order of around 1 micron. However, in some embodiments, the size of the filaments may be more than 1 micron, such as between 1 micron and 5 microns. In such cases, the filaments along the X-axis may overlap, whereby the desired speed of 1 m/s may provide cutting or cleaving of all the glass layers.

In one embodiment, the first controller is further configured to change the variable focal length simultaneously together with the second controller to move said focusing element(s) and/or the transparent material along the separation direction. This is more efficient than for example changing the variable focal length in a before and after moving the focusing element(s) and/or the transparent material.

In another embodiment, the first controller and the second controller are independently operated. This embodiment may allow for more flexibility and ease of programming of the controllers. For example, this embodiment may allow a digital motion controller to control the moving of the focusing elements and/or the transparent material along the separation direction and allow an analogue motion controller to control the changing of the variable focal length along the focusing direction.

In some embodiment, the first controller and the second controller are calibrated with each other, for example such that the starting point (in the real world) is set to be the same for both controllers.

### Focusing element(s)

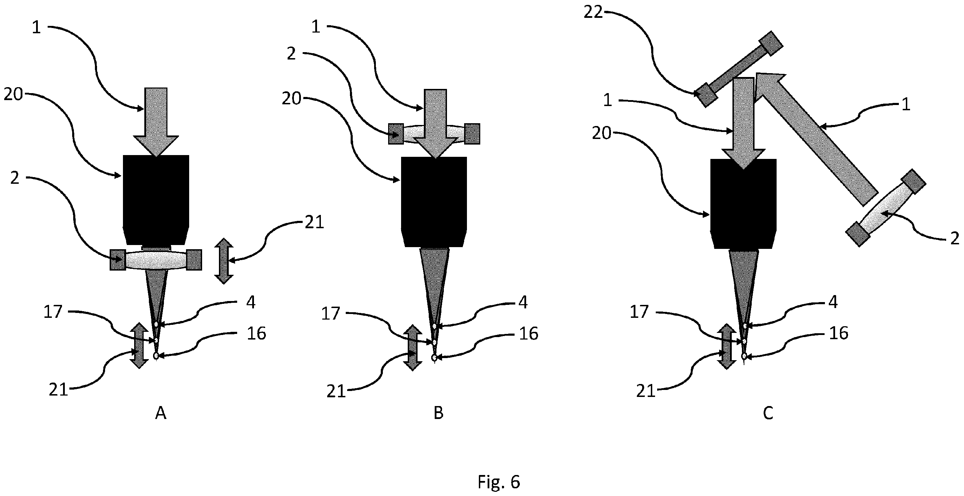

In one embodiment, said focusing element(s) comprise(s) one or more optical lenses configured to move along the focusing direction. Such a focusing element **2** is for example shown in **Fig. 6****.A,** where said focusing further comprises a fixed objective **20** to focus the beam **1**. In this example, the focusing element **2** is configured to move up and down in an oscillating manner as indicated by the double arrow **21,** thereby forming the oscillating filaments (**6, 14, 17**) also indicated by the double arrow **21**.

In another embodiment, said focusing element(s) comprise(s) a deformable lens configured to change its curvature. Such a focusing element **2** is for example shown in **Fig. 6****.B,** where said focusing further comprises a fixed objective **20** to focus the beam **1**. In this example, the focusing element **2** is configured to change its curvature in an oscillating manner, thereby forming the oscillating filaments (**6, 14, 17**) indicated by the double arrow **21.**

In yet another embodiment, said focusing element(s) comprise(s) an adaptive beam shaping element, such as a spatial light modulator (SLM), or an optical micro-electro-mechanical-system (MEMS), knowns as MOEMS. An SLM **22** is for example shown in **Fig. 6****.C,** where said focusing further comprises a fixed objective **20** to focus the beam **1.** In this example, the focusing element(s) comprises both a focusing lens **2,** and the SLM **22.** In this example, the SLM **22** is configured to change its phase in an oscillating manner, thereby forming the oscillating filaments (**6, 14, 17**) indicated by the double arrow **21.** SLMs may be in in various forms, whereof some or many of the forms may be used for the present system and/or method. The forms may be phase-only, transmission-only, reflection-only, and/or a mix thereof. In a form being transmission-only or a reflection only, the beam may be shaped using for example micromirrors. In a form being phase-only, the beam may be shaped using for example liquid crystals. As can be seen from **Fig. 6****.C,** the SLM is setup to modulate the phase of the beam, and in a reflection setup. An advantage of using an adaptive beam shaping element, such as an SLM, is that it is adaptive. Accordingly, an adaptive optical element, such as an SLM, may be used to modify the beam into a desired beam profile. For example, an SLM may be used to generate an Airy beam or a Bessel beam. In one embodiment, the SLM, or any other type of adaptive optics, is configured to both form a desired beam profile, and to change the focal length in the oscillating manner.

In most embodiments, the first focal length and the second focal length differ by more than 2 mm, preferably by more than 10 mm, more preferably by more than 20 mm, such as by more than 50 mm. For example, as seen in both **Fig. 4** and **Fig. 5****,** the focal length difference was 4 mm. In some embodiments, as also shown in **Fig. 4** and **Fig. 5****,** the focal length difference is more than the thickness of the transparent material. In this manner, the separation of filaments along the separation direction may be increased, for example to efficiently process the transparent material.

In some embodiments, the change of the focus and control thereof is managed by an optical encoder in contact with the one or more focusing elements, particularly when the said focusing element(s) comprise(s) one or more optical lenses configured to move along the focusing direction.

In other embodiments, the change of the focus and control thereof is managed by an a backward focus sensor or a triangulation sensor in contact with the one or more focusing elements. These embodiments may be advantageous in handling a high desired control-frequency.

### Laser source

In one embodiment of the present disclosure, the pulse repetition rate is less than 200 MHz, preferably less than 1000 kHz. For example, a pulse repetition rate of around 500kHz has been found to be a preferred pulse repetition rate for processing, i.e. cutting or cleaving, solid glass.

In another embodiment, the pulse energy is less than 1000 µJ, more preferably less than 200 µJ, even more preferably less than 100 µJ, most preferably less than 80 µJ. The inventor of the present disclosure has found that filamentation using the oscillating movement and the above-described low pulse energy achieves successful filamentary damages. The above-described low pulse energy is much lower than that used in prior setups where no oscillations of the focal lengths are used. Accordingly, the inventor of the present disclosure has found that cutting or cleaving of transparent materials can be done by using lasers with much lower pulse peak power, than that required for the Bessel beam or Airy beam approach. Thus, the present disclosure provides a low-cost solution to processing of transparent materials.

In most embodiments, the beam is Gaussian. A Gaussian beam is known to have a rapid divergence. For example, in some embodiments, the numerical aperture is less than 0.5, more preferably less than 0.2. With such a small numerical aperture, cutting or cleaving only happens in a localized area. Accordingly, by using a Gaussian beam, the oscillation in focal length, provides an extended area, which is comparable to using a Bessel or an Airy beam, however with much pulse energy. In these embodiments, it may be stated the beam is a different from a Bessel beam, or different from an Airy beam. However, in other embodiments, the laser beam is an Airy beam, or a Bessel beam. The advantages of using an Airy beam or a Bessel beam is known from the prior art, and as previously described to provide an extended depth of field. The use of an Airy beam or Bessel beam in combination with the oscillating focal length according to present disclosure may however provide an even more extended depth of field, allowing for processing a very thick transparent material.

### Transparent material

In most embodiments, the transparent material is a material that is transparent to the laser beam.

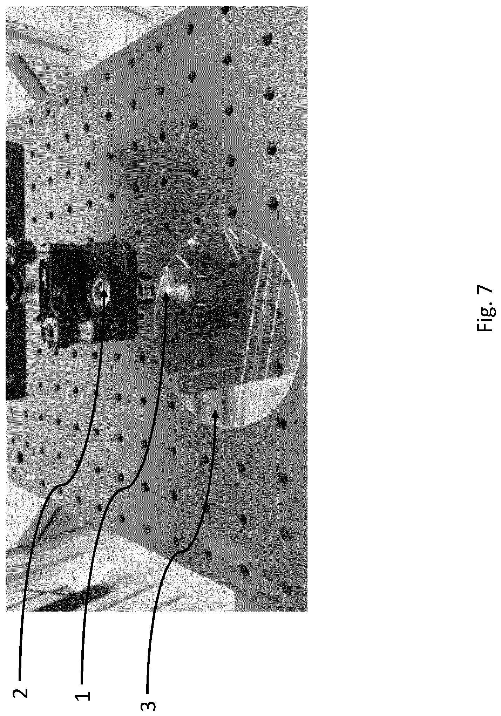

In one embodiment, the transparent material is a glass, for example a solid glass, or a laminated glass substrate. **Fig. 7** shows a working example of the system according to the present disclosure, where a solid glass having a thickness of 1 mm, is processed according to the present disclosure. The beam **1** is translated across the glass surface by moving the focusing lens, in this example while an optical lens that oscillates up and down in the solid glass.

In another embodiment, the transparent material is a polymer, for example a solid polymer or a laminated polymer substrate.

In other embodiments, the transparent material may be an organic material, for example such as the retina.

### Method

In one embodiment, the method further comprises the step of:
- moving, using a second controller configured to move said focusing element(s), said focusing element(s) along a separation direction that differs from the focus direction such that the transparent material is processed along two directions; and/or
- moving, using a second controller configured to move the transparent material, the transparent material along a separation direction that differs from the focus direction such that the transparent material is processed along two directions.

In another embodiment, the step of changing the variable focal length is simultaneous to moving said focusing element(s) along the separation direction.

The advantages of the two above-described embodiments have previously been described in relation to the controller.

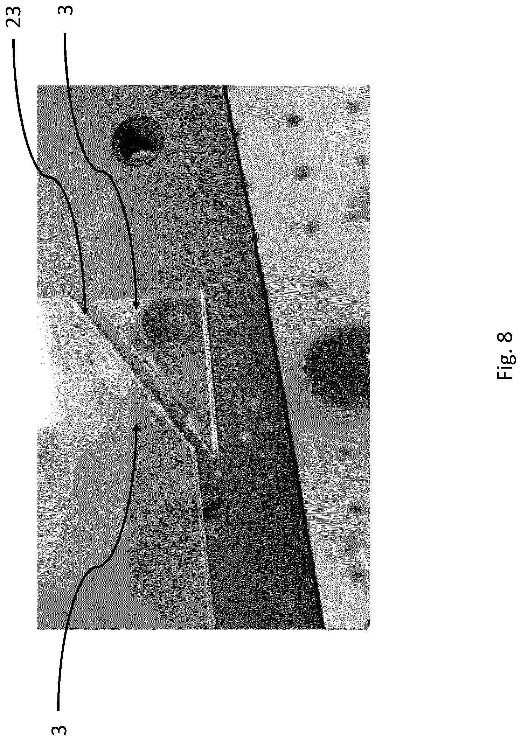

In a preferred embodiment, the separation direction specifies a path on the transparent material, such that by processing the transparent material along the two directions, the transparent material is divided into two separate parts. An example of such a result is shown in **Fig. 8**, where a first part of the transparent material **3** is on the left side and a second part of the transparent material **3** is on the right side. In this example, the transparent material is a laminated glass substrate. The laminated glass substate has been processed according to the method according to the present disclosure. In this example the control-frequency was set to around 1 Hz. Accordingly, the cut along the path **23** has been made rather rough as indicated by the damages along the path. As previously described, the control-frequency can be varied and thus optimized for a specific material. In this case, the control-frequency was not set to be optimal. However, using simulations, as previously described, an optimum may be found.

## Claims

1. A system for processing a transparent material, comprising:
- a laser source configured to generate a laser beam comprising bursts of laser pulses, wherein the pulses are defined by a pulse energy and a pulse repetition rate;
- one or more focusing element(s) configured to receive the laser beam, and direct the laser beam towards the transparent material, said focusing element(s) comprise(s) a variable focal length configured for being changed from a first focal length to a second focal length along a focus direction, whereby:
i. when at the first focal length, a first beam-waist is formed relative to the transparent material, wherein the pulse energy is defined such that first beam-waist forms a first intensity that is responsible for forming a first Kerr-lensing effect inside the transparent material, whereby a first filament is formed at a first Kerr-lensing position inside the transparent material, and
ii. when at the second focal length, a second beam-waist is formed relative to the transparent material, wherein the pulse energy is defined such that the second beam-waist forms a second intensity that is responsible for forming a second Kerr-lensing effect inside the transparent material, whereby a second filament is formed at a second Kerr-lensing position inside the transparent material; and
- a first controller configured to change the variable focal length in an oscillating manner between the first focal length and the second focal length at a desired control-frequency, whereby the first filament and the second filament are formed in an oscillating manner inside the transparent material.

2. The system according to claim 1, wherein the desired control-frequency is lower than the pulse repetition rate.

3. The system according to any of the preceding claims, wherein the desired control-frequency is between 1 Hz and 1000 Hz, preferably between 20 Hz and 800 Hz, more preferably between 30 and 700 Hz, such as around 50-150 Hz, such as around 130 Hz.

4. The system according to any of the preceding claims, wherein said focusing element(s) comprise(s) one or more optical lenses configured to move along the focusing direction, and/or a deformable lens configured to change its curvature, and/or an adaptive beam shaping element, such as a spatial light modulator (SLM).

5. The system according to any of the preceding claims, wherein the first focal length and the second focal length differ by more than 2 mm, preferably by more than 10 mm, more preferably by more than 20 mm, such as by more than 50 mm.

6. The system according to any of the preceding claims, wherein the pulse repetition rate is less than 200 MHz.

7. The system according to any of the preceding claims, wherein the pulse energy is less than 1000 µJ, more preferably less than 200 µJ, even more preferably less than 100 µJ, most preferably less than 80 µJ.

8. The system according to any of the preceding claims, wherein the transparent material is a glass or a polymer.

9. The system according to claim 8, wherein the glass is a laminated glass substrate, and/or wherein the polymer is a laminated polymer substrate.

10. The system according to any of the preceding claims, wherein the system further comprises a second controller configured to move:
- said focusing element(s) along a separation direction that differs from the focus direction such that the transparent material is processed along two directions; and/or
- the transparent material along a separation direction that differs from the focus direction such that the transparent material is processed along two directions.

11. The system according to claim 10, wherein the first controller is further configured to change the variable focal length simultaneously together with the second controller to move said focusing element(s) and/or the transparent material along the separation direction.

12. The system according to claim 10 and/or claim 11, wherein the first controller and the second controller are independently operated.

13. A method for processing a transparent material, comprising the steps of:
- generating, using a laser source, a laser beam comprising bursts of laser pulses, wherein the pulses are defined by a pulse energy and a pulse repetition rate;
- directing, using one or more focusing element(s) configured to receive the laser beam, the laser beam towards the transparent material, wherein said focusing element(s) comprise(s) a variable focal length configured for being changed from a first focal length to a second focal length along a focus direction, whereby:
i. when at the first focal length, a first beam-waist is formed relative to the transparent material, the pulse energy being defined such that first beam-waist forms a first intensity that is responsible for forming a first Kerr-lensing effect inside the transparent material, whereby a first filament is formed at a first Kerr-lensing position inside the transparent material, and
ii. when at the second focal length, a second beam-waist is formed relative to the transparent material, the pulse energy being defined such that the second beam-waist forms a second intensity that is responsible for forming a second Kerr-lensing effect inside the transparent material, whereby a second filament is formed at a second Kerr-lensing position inside the transparent material; and
- changing, using a first controller, the variable focal length in an oscillating manner between the first focal length and the second focal length at a desired control-frequency, whereby the first filament and the second filament are formed in an oscillating manner inside the transparent material.

14. The method according to claim 13, wherein the method further comprises the step of:
- moving, using a second controller configured to move said focusing element(s), said focusing element(s) along a separation direction that differs from the focus direction such that the transparent material is processed along two directions; and/or
- moving, using a second controller configured to move the transparent material, the transparent material along a separation direction that differs from the focus direction such that the transparent material is processed along two directions.

15. The method according to claim 14, wherein the step of changing the variable focal length is simultaneous to moving said focusing element(s) along the separation direction.
